# FASCICULE DE BREVET EUROPEEN

(11) **EP 0 749 783 B1**
(45) Date de publication et mention de la délivrance du brevet: **02.11.2000**
(21) Numéro de dépôt: 95401445.2
(22) Date de dépôt: 20.06.1995
(51) Int. Cl.: B02C 18/26, B02C 19/14, B02C 18/44, B02C 18/12

(54) **Machine de fragmentation de pièces en matière plastique**
Maschine zum Zerkleinern von Kunststoffteilen
Crushing machine for plastic parts

(43) Date de publication de la demande: 27.12.1996
(73) Titulaire: DEVELOPPEMENT, REDUCTION, RECUPERATION, RECYCLAGE, REVALORISATION " D4R" (S.A.R.L.), 02400 Chateau Thierry (FR)
(72) Inventeur: Moreau, Pierre, F-57600 Forbach (FR)
(74) Mandataire: Viard, Jean

(56) Documents cités:
- EP-A- 0 004 935
- DE-A- 1 632 455
- FR-A- 1 297 905
- US-A- 3 527 416

## Description

La présente invention a pour objet une machine de fragmentation en vue de leur destruction puis de leur recyclage, de pièces en matières plastiques et en particulier, mais non exclusivement de rouleaux de chutes ou squelettes de thermoformage. Une telle machine peut également déchiqueter des pièces en matière plastique telle que des récipients vides, bouteilles ou autres. Du document US-A-3 527 416 est connue une machine selon le préambule de la revendication 1.

Un rouleau de chute de formage se présente sous la forme d'un cylindre de huit cent millimètres de diamètre dont le poids varie de 10 à 20 kg. Des machines permettant d'effectuer le déchiquetage de telles pièces existent. Mais elles font appel à des organes mécaniques puissants ce qui nécessite beaucoup d'énergie, et par suite leur coût de fonctionnement est très élevé. Les broyeurs classiques permettant de broyer le matériau en une seule fois sont des machines d'un poids de 5 tonnes d'un encombrement de 2X2 m² et d'une puissance de 100 Chevaux. De telles installations sont onéreuses et peu de sociétés sont en mesure de supporter un tel investissement.

L'objet de l'invention est de permettre à tous les thermoformeurs de pouvoir s'équiper d'une installation qui permette de réduire à un volume convenable les chutes de thermoformage qui actuellement sont collectées dans des bennes de 32 m³ pour un poids de l'ordre de 2.000 kg. Le coût de la location de la benne ainsi que les coûts de transport voire la mise ne décharge sont tels que ces déchets de production présentent une charge financièrement importante et une catastrophe sur le plan écologique.

La présente invention a pour objet de pallier cet inconvénient.

La conception de l'invention est telle que le produit placé dans la cuve de réception se détruit automatiquement et sans présence nécessaire de personnel. Les pièces placées dans la machine sont réduites en quelques minutes et la machine s'arrête d'elle-même lorsque la destruction est effectuée, par un minuteur pré-réglé et ce régulièrement dès que le squelette est déchargé de la thermoformeuse d'où une économie de place.

Selon l'invention, la machine est caractérisée en ce qu'elle présente, montée sur un bâti, une cuve cylindrique inclinée dont le fond est mobile en rotation alternative, à l'intérieur de laquelle tourne au moins une lame de scie circulaire, entraînée par un moteur, la lame étant d'un diamètre égal au rayon de la cuve.

L'invention s'appuie sur le pouvoir destructeur de lames de scies équipées de pastilles de carbure de tungstène qui ne nécessitent que peu de puissance ( moins de 5CV).

Le mouvement alternatif de rotation du fond de la cuve peut être obtenu de manière classique, soit par un moto réducteur, soit par un ensemble pignon denté-crémaillère entraîné par un vérin pneumatique.

Selon une autre caractéristique de l'invention, la lame de scie est montée oscillante dans un logement intégré dans le fond de la cuve. La lame est solidaire d'un moteur qui est lui-même monté oscillant autour d'un axe horizontal, de sorte que, au repos, la lame est horizontale et insérée dans son logement . Elle ne mord pas dans la matière plastique. La lame est ainsi escamotée ce qui permet d'obtenir un démarrage à vide. Par contre, dès que le fond de la cuve se met en mouvement, la lame oscille par rapport au fond de la cuve de manière à être inclinée par rapport à celui-ci. Elle déchiquette la matière se trouvant dans une première couronne du fond de la cuve. Puis, après inversion du mouvement rotatif du fond de la cuve, elle oscille dans l'autre sens par rapport au fond de la cuve et déchiquette la matière se trouvant dans la seconde couronne de celle-ci.

Le produit découpé est aspiré par un tube central au moyen d'un aspirateur centrifuge qui aspire le produit sous forme de sciure-confetti et le propulse dans un cyclone qui sépare l'air du produit traité.

D'autres caractéristiques et avantages de l'invention apparaîtront au cours de la description qui va suivre de modes particuliers de réalisation, donnés uniquement à titre d'exemples non limitatifs, en regard des dessins qui représentent :
- La figure 1, une vue schématique d'une machine selon l'invention;
- la figure 2, une vue en élévation du moteur de déchiquetage;
- la figure 3, un schéma de montage du moteur sur la machine;
- la figure 4, un schéma d'explication du balayage du fond de la cuve par la lame de scie.

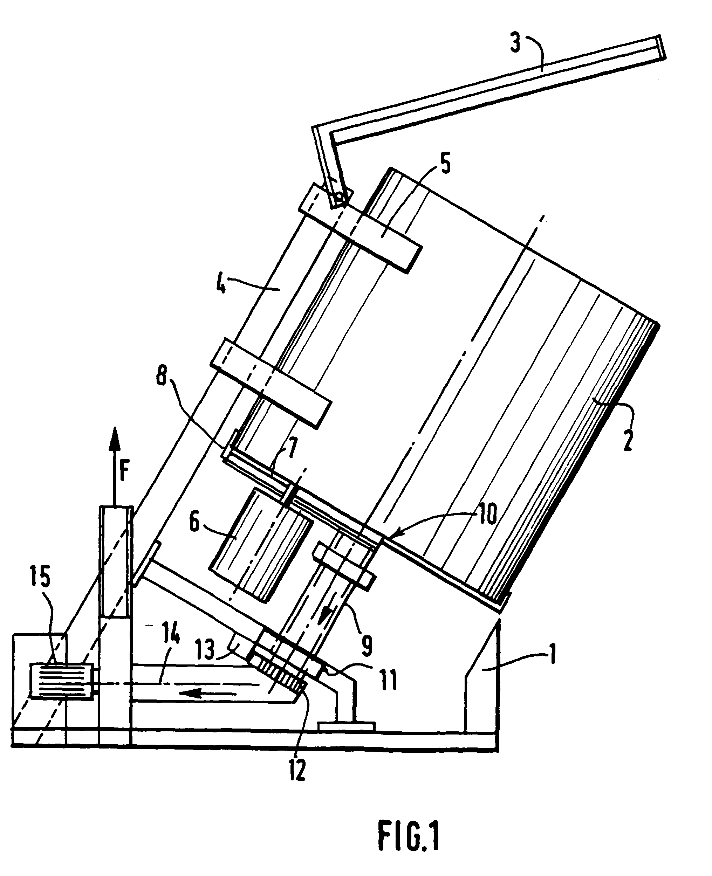

Sur la figure 1, on voit que la machine se compose d'un bâti 1 reposant sur le sol. Sur le bâti 1 est montée, en position inclinée de sensiblement 60° une cuve de traitement 2 destinée à recevoir les pièces en matière plastique à déchiqueter ou lacérer. Cette inclinaison permet une descente automatique, sous l'influence de la pesanteur, des pièces introduites à la partie supérieure. La cuve 2 est fermée par un couvercle 3 articulé sur un limon 4 dont la seconde extrémité est solidaire du bâti 1. La cuve 2 est supportée par le limon 4 au moyen de bras 5. Au-dessous de la cuve 2 est monté un moteur 6 entraînant une lame de scie 7 à l'intérieur d'un logement 8 ménagé dans le fond de la cuve 2. Le logement 8 et par suite le moteur 6 et la lame de scie 7 tournent avec la partie centrale du fond de la cuve 2 qui correspond avec un conduit 9 dont le rôle sera expliqué par la suite. Le conduit 9 est solidaire du fond 10 de la cuve 2 qui est monté pivotant par rapport à la paroi latérale de celle-ci. A cet effet, le conduit 9 tourne dans des paliers 11. solidaires du bâti 1.

Dans l'exemple représenté, le conduit 9 est entraîné en rotation alternative par une roue dentée 12 en prise avec un ensemble comprenant une crémaillère entraînée par un vérin pneumatique 13. Tout autre moyen d'entraînement tel qu'un moto réducteur, par exemple, pourrait être utilisé. Le conduit creux 9 correspond, à son autre extrémité avec un conduit horizontal 14 dans lequel débouche un aspirateur 15 qui, par dépression aspire la matière déchiquetée et l'envoie sur un cyclone (non représenté) ou autre dispositif séparateur symbolisé par la flèche F, à partir duquel la matière pratiquement en poudre peut être introduite dans un container de transport vers le lieu de recyclage.

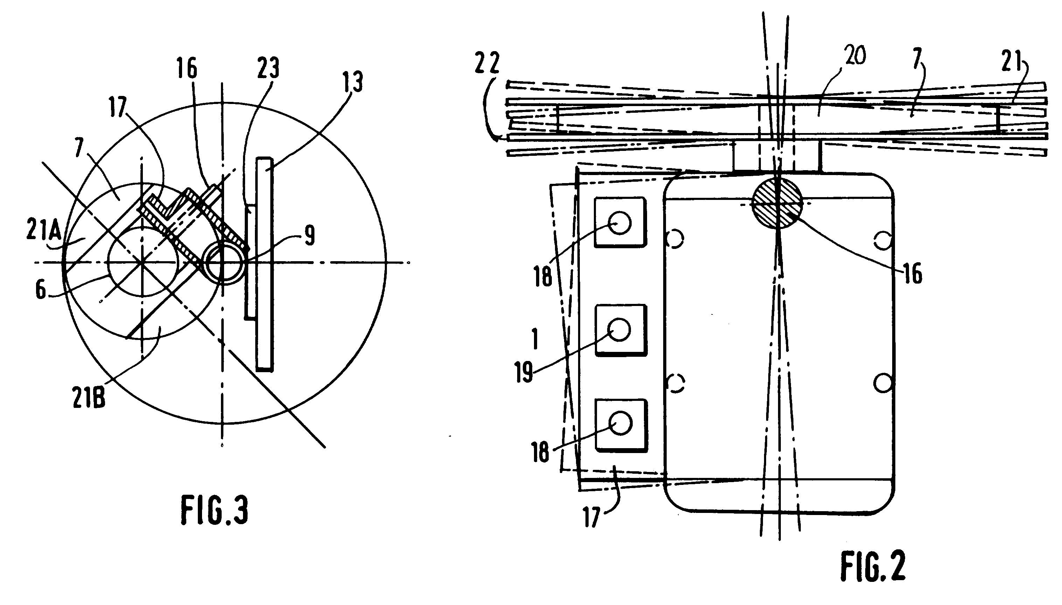

La figure 2 représente le montage du moteur 6. Le moteur 6 est articulé sur le bâti 1 au moyen d'un axe 16. Sur l'arbre moteur est montée la lame de scie 7 qui, conformément à l'invention peut prendre trois positions ajustables en fonction de la position du carter moteur. Lorsque celui-ci est vertical, la lame 7 est horizontale et, contenue dans un logement elle est inactive même lorsque le moteur est alimenté, les pièces de plastique restant, en général au-dessus du logement. C'est la position de démarrage dans laquelle le moteur tourne à vide. Le corps du moteur est solidaire d'une plaque 17. Dans cette plaque sont formés trois petits vérins pneumatiques 18 dont la tige constituant un doigt (non représenté) peut pénétrer dans un trou 19 du support 17. Ce doigt est terminé par une extrémité conique qui peut glisser dans le trou 19 correspondant pour centrer automatiquement le support. En fonction du doigt pénétrant dans un trou, le moteur 6 prend une inclinaison positive, nulle ou négative par rapport à l'axe vertical. Et le doigt sélectionné dépend du sens de déplacement du vérin, c'est à dire du sens de rotation du fond mobile 10, la liaison se faisant au moyen d'un automate.

Comme cela apparaît sur la figure 2, et sur la figure 3, la scie 7 est pratiquement constituée par un moyeu 20 comportant deux lames circulaires 21, 22 vissées sur le moyeu 20. Sur la figure 2, la position de repos est représentée en traits pleins et les deux autres positions en traits mixtes.

Sur la figure 3 qui est une vue par-dessus de l'ensemble moteur on distingue le vérin pneumatique 13 et la crémaillère 23, la crémaillère engrenant avec une roue dentée solidaire du tube d'évacuation 9. On retrouve également le support moteur 17 monté pivotant autour de l'axe 16 tourillonné dans le bâti 1 et les lames de scies 21 et 22.

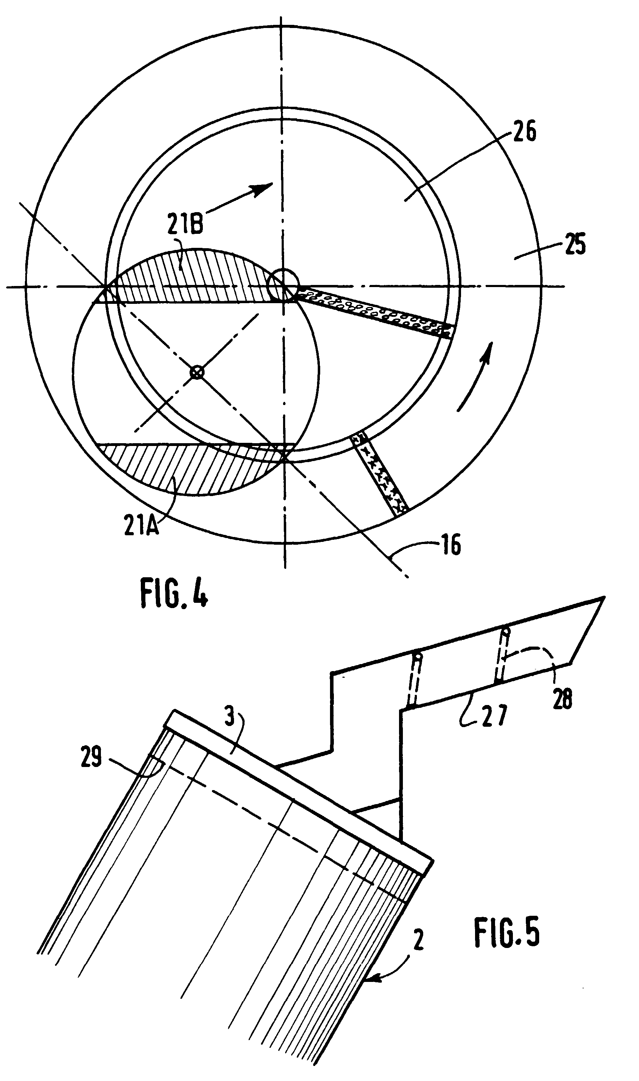

Le fonctionnement du déchiquetage par les lames 21 et 22 sera maintenant décrit en regard de la figure 4 qui est un schéma géométrique montrant comment, grâce à l'invention, il est possible de balayer la surface totale du fond 10 de la cuve 2 avec une scie de diamètre inférieur à celui du fond.

Dans un premier temps, le fond mobile tourne dans le sens sinistrorsum (anti-horaire). Le moteur, a pivoté également dans le sens sinistrorsum et par suite, la lame 21 est en saillie d'environ deux centimètres au-dessus de son logement 8. Le moteur 6 tourne à environ 3.000 tours/minute alors que le fond de la cuve tourne à environ 10 tours/mn. Dans ces conditions, le secteur 21A balaie la couronne extérieure 25 et réduit en fragments ta matière prenant appui sur cette couronne.

Après que le fond 10 de la cuve 2 ait effectué un tour complet, en pouvant tourner pratiquement de 380°, le mouvement du vérin 13 et de la crémaillère 23 s'inverse. Le fond tourne alors dans le sens dextrorsum (horaire). La position du moteur 6 est modifiée par un vérin 18, le secteur 21A rentre dans le logement 8 alors que le secteur 21B vient en saillie. Comme précédemment, le moteur 6 tournant toujours dans le même sens, le secteur 22 balaie la couronne interne 26 du fond de la cuve et déchiquette la matière se trouvant dans ce secteur, la matière réduite en petits morceaux est évacuée par le conduit 9. Ces opérations continuent jusqu'à ce que toute la matière présente ait été fragmentée. Le temps de fragmentation est déterminé par une minuterie (non représentée) qui est déclenchée par la fermeture du couvercle 3. En effet, pour des raisons de sécurité, le broyeur selon l'invention ne peut fonctionner que lorsque le couvercle est fermé.

Dès que la machine est chargée, le démarrage d'un cycle de destruction est initialisé et se déroule de la manière suivante :
- fermeture du couvercle (sécurité)
- mise en marche;
- démarrage du moteur électrique de la scie;
- sortie de la lame selon un secteur définissant la hauteur de coupe réglable;
- mise en rotation du fond de cuve selon un angle de 360 à 380°;
- escamotage de la lame dans son logement;
- sortie de la lame selon un secteur identique mais diamétralement opposé;
- remise en mouvement du fond de la cuve en sens opposé au précédent;
- évacuation des fragments et fin du déchiquetage

La figure 5 représente une variante d'utilisation de la machine selon l'invention plus spécialement destinée aux récipients en plastique tels que des bouteilles. Dans ce cas, le couvercle 3 de la cuve 2 est fermé et reste fermé. Il porte une goulotte ou trémie d'introduction 27 permettant l'introduction de pièces plastiques calibrées par le diamètre de la goulotte. Un capteur symbolisé par la ligne 29 émet un signal dès que la cuve 2 est pleine. Et le moteur 6 se met en marche pour déchiqueter les pièces à recycler. Pour éviter les projections éventuelles de la matière déchiquetée, on prévoit, de préférence, à l'intérieur de la goulotte inclinée 27, des clapets 28.

## Revendications

1. Machine de fragmentation de pièces en matière plastique, comportant, montée sur un bâti (1), une cuve cylindrique (2) dont le fond (10) est mobile en rotation alternative, caractérisée en ce qu'à l'intérieur de ladite cuve tourne au moins une scie circulaire (7), entraînée par un moteur (6), la scie (7) étant d'un diamètre sensiblement égal au rayon de la cuve (2).

2. Machine selon la revendication 1 caractérisée en ce que la scie (7) est montée dans un logement (8) intégré dans le fond de la cuve, la lame étant montée sur l'arbre d'un moteur (6) qui est lui-même monté oscillant autour d'un axe horizontal (16).

3. Machine selon l'une des revendications 1 ou 2 caractérisée en ce que la scie (7) est constituée par un moyeu (20) sur lequel sont vissées en positions opposées deux paires de lames circulaires (21, 22).

4. Machine selon la revendication 1, caractérisée en ce que le fond (10) est entraîné en rotation alternative par un vérin pneumatique (13) solidaire d'une crémaillère (23), en prise avec une roue dentée solidaire d'un conduit creux (9).

5. Machine selon l'une quelconque des revendications précédentes caractérisée en ce que le moteur (6) d'entraînement de la scie (7) est incliné, par rapport à l'horizontale au moyens de petits vérins pneumatiques (18) dont les tiges pénètrent dans des orifices (19) du support de moteur (17).

6. Machine selon la revendication 3, caractérisée en ce que les lames (21, 22) sont alternativement en saillie au-dessus du logement (8) en fonction du sens de rotation du fond mobile (10).

7. Machine selon l'une quelconque des revendications précédentes caractérisée en ce que le couvercle (3) déclenche par sa fermeture, la mise en marche de la machine.

8. Machine selon l'une quelconque des revendications précédentes, caractérisée en ce que le couvercle (3) est muni d'une trémie (27) pour l'introduction des pièces et d'un capteur (29) indiquant que la cuve est pleine.

## Patentansprüche

1. Maschine zum Zerkleinern von Kunststoffteilen, umfassend, aufgebaut auf ein Tragelement (1), eine zylindrische Schüssel (2), deren Boden (10) mobil in alternierender Rotation ist, dadurch gekennzeichnet, daß innen in besagter Schüssel wenigstens eine Kreissäge (7) rotiert, die durch einen Motor (6) angetrieben wird, wobei die Säge (7) einen deutlich gleichen Durchmesser wie der Radius der Schüssel (2) hat.

2. Maschine gemäß Anspruch 1, dadurch gekennzeichnet, daß die Säge (7) in einer in dem Boden der Schüssel integrierten Aufnahme (8) angebracht ist, wobei die Klinge auf der Welle eines Motors (6) angebracht ist, der selbst oszillierend um die horizontale Achse (16) angebracht ist.

3. Maschine gemäß Anspruch 1 oder 2, dadurch gekennzeichnet, daß die Säge (7) durch eine Anlagefläche (20) gebildet ist, auf der in gegenüberliegender Position zwei Paar Rundklingen (21, 22) aufgeschraubt sind.

4. Maschine gemäß Anspruch 1, dadurch gekennzeichnet, daß der Boden (10) durch einen Pneumatikzylinder (13) in alternierender Rotation angetrieben wird, der mit einer Zahnstange (23) fest verbunden ist, die in ein Zahnrad eingreift, das mit einer hohlen Leitung (9) fest verbunden ist.

5. Maschine gemäß einem der vorherigen Ansprüche, dadurch gekennzeichnet, daß der Antriebsmotor (6) der Säge (7) im Verhältnis zur Horizontalen mittels kleiner Pneumatikzylinder (18) geneigt ist, deren Stifte in Öffnungen (19) des Motoruntersatzes (17) eindringen.

6. Maschine gemäß Anspruch 3, dadurch gekennzeichnet, daß die Klingen (21, 22) alternativ über der Aufnahme (8) hervorstehen, in Abhängigkeit von der Rotationsrichtung des mobilen Bodens (10).

7. Maschine gemäß einem der vorherigen Ansprüche, dadurch gekennzeichnet, daß der Deckel (3) durch sein Schließen das Einschalten der Maschine auslöst.

8. Maschine gemäß einem der vorherigen Ansprüche, dadurch gekennzeichnet, daß der Deckel (3) mit einem Trichter (27) zum Einführen der Teile und mit einem Sensor (29) versehen ist, der anzeigt, daß die Schüssel voll ist.

## Claims

1. Crushing machine for plastic parts comprising mounted on a frame (1) a cylindrical tank (2) whose bottom (10) is mobile in alternative rotation, characterised in that inside said tank rotates at least one circular saw (7) driven by a motor (6), the saw (7) having a diameter approximately equal to the radius of the tank (2).

2. Machine according to claim 1, characterised in that the saw (7) is mounted in a housing (8) integrated in the bottom of the tank, the blade being mounted on the shaft of a motor (6) mounted oscillating around a horizontal spindle (16).

3. Machine according to claim 1 or 2, characterised in that the saw (7) is constituted by a hub (20) on which two pairs of circular blades (21, 22) are screwed in opposing positions.

4. Machine according to claim 1, characterised in that the bottom (10) is driven in alternative rotation by a pneumatic thrustor (13) integral with a rack (23) in gear with a toothed wheel integral with a hollow pipe (9).

5. Machine according to one of the preceding claims, characterised in that the motor (6) for driving the saw (7) is slanted with respect to horizontal by means of small pneumatic thrustors (18) whose rods penetrate into orifices (19) of the motor support (17).

6. Machine according to claim 3, characterised in that the blades (21, 22) alternatively project above the housing (8) according to the direction of rotation of the mobile bottom (10).

7. Machine according to one of the preceding claims, characterised in that the cover (3) on closing triggers starting of the machine.

8. Machine according to one of the preceding claims, characterised in that the cover (3) is fitted with a hopper (27) for introducing parts and a sensor (29) indicating that the tank is full.
